(19)

Europäisches
Patentamt
European
Patent Office
Office européen
des brevets

(11) **EP 2 395 212 A1**

(12) **EUROPEAN PATENT APPLICATION**

published in accordance with Art. 153(4) EPC

(43) Date of publication:
**14.12.2011 Bulletin 2011/50**

(21) Application number: **09839656.7**

(22) Date of filing: **06.02.2009**

(51) Int Cl.:
***F02B 37/24*** *(2006.01)*     ***F04D 29/46*** *(2006.01)*

(86) International application number:
**PCT/JP2009/052061**

(87) International publication number:
**WO 2010/089879 (12.08.2010 Gazette 2010/32)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **Toyota Jidosha Kabushiki Kaisha
Toyota-shi, Aichi 471-8571 (JP)**

(72) Inventor: **TSUKIYAMA, Takashi
Toyota-shi
Aichi 471-8571 (JP)**

(74) Representative: **Intès, Didier Gérard André et al
Cabinet Beau de Loménie
158, rue de l'Université
75340 Paris Cedex 07 (FR)**

(54) **VARIABLE CAPACITY SUPERCHARGER FOR INTERNAL COMBUSTION ENGINE**

(57)     A variable capacity supercharger (1) for an internal combustion engine is provided with a turbine (2) having an exhaust-side movable vane mechanism (20) for changing the cross-sectional area of a flow path of exhaust gas introduced into a turbine wheel (5) by open-close operation of a movable vane (23), a compressor (3) having an intake-side movable vane mechanism (30) for changing the cross-sectional area of a flow path of intake air delivered from a compressor wheel (11) by open-close operation of a movable vane (33), and a drive mechanism (40) having an actuator (41) used in common by the exhaust-side movable vane mechanism (20) and the intake-side movable vane mechanism (30) to perform open-close operation of the movable vane (23,33) of each movable vane mechanism as transmitting operation of the actuator to both of the movable vane mechanisms (20,30).[2]

FIG.1

EP 2 395 212 A1

**Description**

Technical Field

The present invention relates to a variable capacity supercharger for an internal combustion engine capable of varying a supercharging efficiency by operating movable vanes.

Background Art

There is known a variable geometry type supercharger, as a supercharger to be used for an internal combustion engine, to vary a supercharging efficiency by arranging a plurality of movable vanes at a diffuser portion of a compressor so as to be circularly aligned and operating the movable vanes (e.g., see Patent Document 1). In addition, there are Patent Document 2 and Patent Document 3 as prior art references in relation to the present invention.
Patent Document 1: JP-A-2005-163691
Patent Document 2: JP-A-08-254127
Patent Document 3: JP-A-2006-169985

Summary of Invention

Technical Problem

Here, it is assumed that the above variable geometry type compressor is combined with a variable nozzle type turbocharger to drive movable vanes of a turbine with an actuator. When it is configured to drive the movable vanes at the turbine side and the movable vanes at the compressor side respectively with a separate actuator, there is a problem that mounting space for the supercharger is increased as the drive mechanism being upsized to have two actuators.
In view of the foregoing, one object of the present invention is to provide a variable capacity supercharger for an internal combustion engine capable of suppressing upsizing of the drive mechanism when the turbine and compressor are respectively provided with a movable vane mechanism.

Solution to Problem

A variable capacity supercharger of the present invention includes: a turbine including an exhaust-side movable vane mechanism which varies cross-sectional area of a flow path of exhaust gas introduced into a turbine wheel by open-close operation of a movable vane; a compressor including an intake-side movable vane mechanism which varies cross-sectional area of a flow path of intake air delivered from a compressor wheel by open-close operation of a movable vane; and a drive mechanism having an actuator used in common by the exhaust-side movable vane mechanism and the intake-side movable vane mechanism to perform open-close operation of the movable vane of each movable vane mechanism as transmitting operation of the actuator to both of the movable vane mechanisms.
According to the variable capacity supercharger of the present invention, since the respective movable vanes of the exhaust-side movable vane mechanism and the intake-side movable vane mechanism are driven by the common actuator, the number of the actuators can be reduced compared to a case of disposing a dedicated actuator for each movable vane mechanism. Therefore, it is possible to reduce space required for mounting the supercharger as suppressing upsizing of the drive mechanism against the movable vane mechanism.
In one embodiment of the supercharger of the present invention, the drive mechanism and operation input portions of both of the movable vane mechanisms may be respectively connected so that the movable vane of the intake-side movable vane mechanism is operated in the opening direction as well when the movable vane of the exhaust-side movable vane mechanism is operated in the opening direction; and at least either the exhaust-side movable vane mechanism or the intake-side movable vane mechanism may be provided with a device which lowers drive force in the opening direction to be added to the operation input portion when operating the movable vane in the opening direction than drive force in the closing direction to be added to the operation input portion when operating the movable vane in the closing direction. According to this embodiment, it is possible to operate the movable vane of the exhaust-side movable vane mechanism and the movable vane of the intake-side movable vane mechanism with the common actuator in the same direction. In addition, since the device to lower the drive force in the opening direction than the drive force in the closing direction of at least one of the movable vane mechanisms is provided, the drive force in the opening direction to be added to the respective operation input portions of the two movable vane mechanisms can be sufficient as being less compared to a case of omitting the device. Accordingly, the output power required for the actuator can be reduced, thereby enabling to achieve downsizing of the actuator, and then, to further achieve downsizing of the supercharger. Here, there is a tendency that resistance of exhaust gas or intake air is relatively increased during opening of the movable vane than during closing of the movable vane. Therefore, it is more effective to lower the drive force in the opening direction than the drive force in the closing direction for achieving downsizing of the actuator.

In addition, distance from the rotation center of the movable vane to an end edge at an outer circumferential side of the movable vane may be set to be larger than distance from the center position to an end edge at an inner circumferential side of the movable vane as the lowering device. According to this embodiment, it is possible to exert moment to the movable vane in the opening direction with force applied to the movable vane by flow of exhaust gas or intake air. Accordingly, the drive force in the opening direction to be added by the actuator to the operation input portion can be lowered as utilizing the force applied to the movable vane caused by exhaust gas or intake air as assist force against the drive force in the opening direction.

In one embodiment of the supercharger of the present invention, operational direction of the operation input portion of the exhaust-side movable vane mechanism and operational direction of the operation input portion of the intake-side vane drive mechanism are may be set respectively in circumferential directions of the turbine and the compressor; a relation between the operational direction of the operation input portion of the intake-side movable vane mechanism and the open-close direction of the movable vane of the intake-side movable vane mechanism may be set to be opposite to a relation between the operational direction of the operation input portion of the exhaust-side movable vane mechanism and the open-close direction of the movable vane of the exhaust-side movable vane mechanism; and the drive mechanism may include an output shaft which is rotationally driven by the actuator, an exhaust-side interlock mechanism which converts rotation of the output shaft into rotation of the operation input portion of the exhaust-side movable vane mechanism as existing between one side against the center part of the output shaft and the operation input portion of the exhaust-side movable vane mechanism, and an intake-side interlock mechanism which converts rotation of the output shaft into rotation of the operation input portion of the intake-side movable vane mechanism as existing between the other side against the center part of the output shaft and the operation input portion of the intake-side movable vane mechanism. According to this embodiment, when the output shaft is rotated by the actuator, the rotational motion is transmitted to the operation input portion of the exhaust-side movable vane mechanism and the operation input portion of the intake-side movable vane mechanism via the respective interlock mechanisms as being directed mutually opposite in the circumferential direction. Accordingly, it is possible to operate the respective movable vanes of a pair of the movable vane mechanisms in the same direction owing to the rotational motion in one direction generated by the actuator such that one movable vane mechanism is operated in the opening direction while the other movable vane mechanism is operated in the opening direction as well.

In addition, the operation input portion of the exhaust-side movable vane mechanism and the operation input portion of the intake-side movable vane mechanism may be located at the same side viewing from a turbine shaft; the output shaft may be arranged in parallel with the turbine shaft; and each of the exhaust-side interlock mechanism and the intake-side interlock mechanism may include a rod which is rotatably connected respectively to the output shaft and the operation input portion thereof. According to this embodiment, when the output shaft of the actuator is rotated in one direction, the operation input portion of one movable vane mechanism is pushed out via the rod and the operation input portion of the other movable vane mechanism is pulled in via the rod. As a result, the operation input portions of both of the movable vane mechanisms are operated being mutually opposite in the circumferential direction, so that the movable vanes are operated in the same direction.

Brief Description of Drawings

Fig. 1 is a partially broken side view of a turbine side of a turbocharger according to an embodiment of the present invention.
Fig. 2 is a partially broken side view of a compressor side of the turbocharger according to the embodiment of the present invention.
Fig. 3 is a partial sectional view taken along an axis line direction of the turbocharger according to the embodiment of the present invention.
Fig. 4 is a view showing a structure from an operation lever to an arm in a movable vane mechanism at the turbine side.
Fig. 5 is a view showing a structure around movable vanes in the movable vane mechanism at the turbine side.
Fig. 6 is a view showing a structure from an operation lever to an arm in a movable vane mechanism at the compressor side.
Fig. 7 is a view showing a structure around movable vanes in the movable vane mechanism at the compressor side.
Fig. 8 is an enlarged view of a part of movable vanes.
Fig. 9 is an explanatory view of moment when driving the movable vanes in the opening direction.

Description of Embodiments

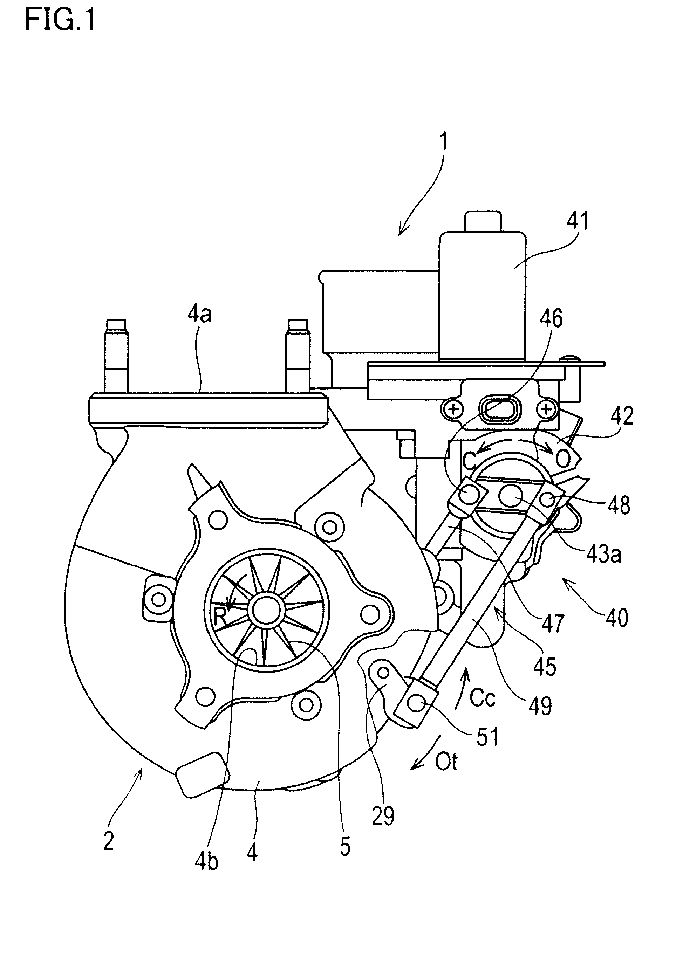

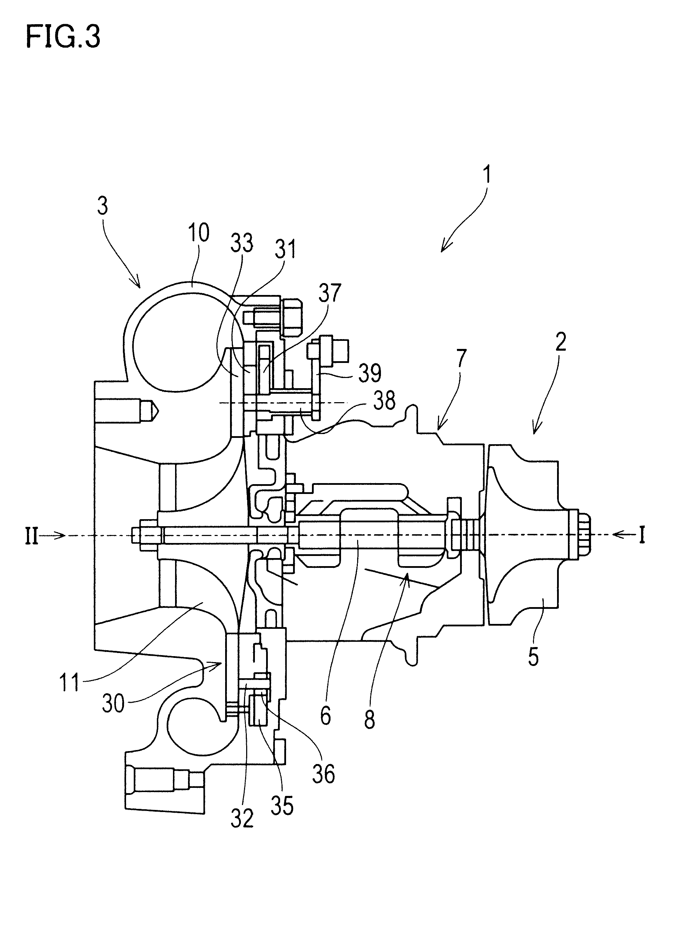

Figs. 1 to 3 show a turbocharger as a variable capacity supercharger according to an embodiment of the present invention. A turbocharger 1 is provided with a turbine 2 and a compressor 3. The turbine 2 includes a turbine housing 4 and a turbine wheel 5 arranged in the turbine housing 4. The turbine housing 4 is placed at some midpoint of an exhaust path of an internal combustion engine (hereinafter, referred to as engine, not shown). The turbine housing 4 is provided with an exhaust gas inlet port 4a to be connected to the upstream side of the exhaust path (i.e., the exhaust port side of the engine) at an outer circumference thereof and an exhaust gas outlet port 4b to be connected to the downstream side of the exhaust path at the center part thereof. Here, the turbine housing 4 and a structure of surroundings thereof are not shown in Fig. 3 for simplicity. A turbine shaft 6 is formed coaxially with the turbine wheel 5 and is supported rotatably by a bearing portion 8 in a bearing housing 7.

Meanwhile, the compressor 3 includes a compressor housing 10 and a compressor wheel 11 arranged in the compressor housing 10. The compressor housing 10 is placed at some midpoint of an intake path of the engine. The compressor housing 10 is provided with an intake air inlet port 10a to be connected to the upstream side of the intake path of the engine at the center part thereof and an intake air outlet port 10b to be connected to the downstream side of the intake path at an outer circumference thereof. The compressor wheel 11 is attached at a distal end part of the turbine shaft 6 as being integrally rotatable.

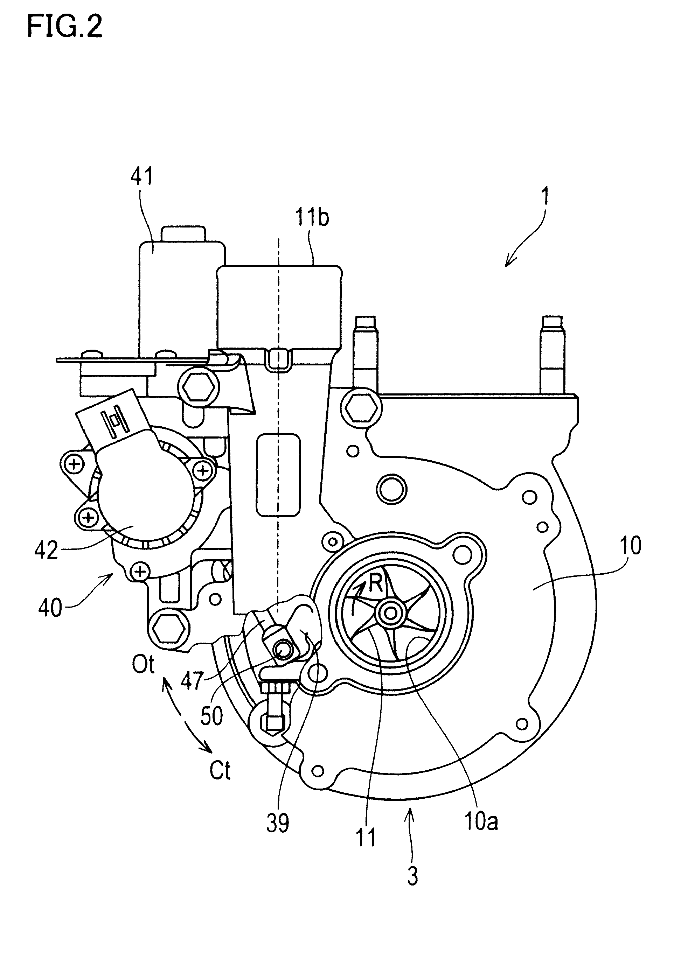

A movable vane mechanism is further provided respectively to the turbine 2 and the compressor 3 as not shown in Figs. 1 and 2 for simplicity. Further, a drive mechanism 40 is provided to the turbocharger 1 to drive the movable vane mechanisms.

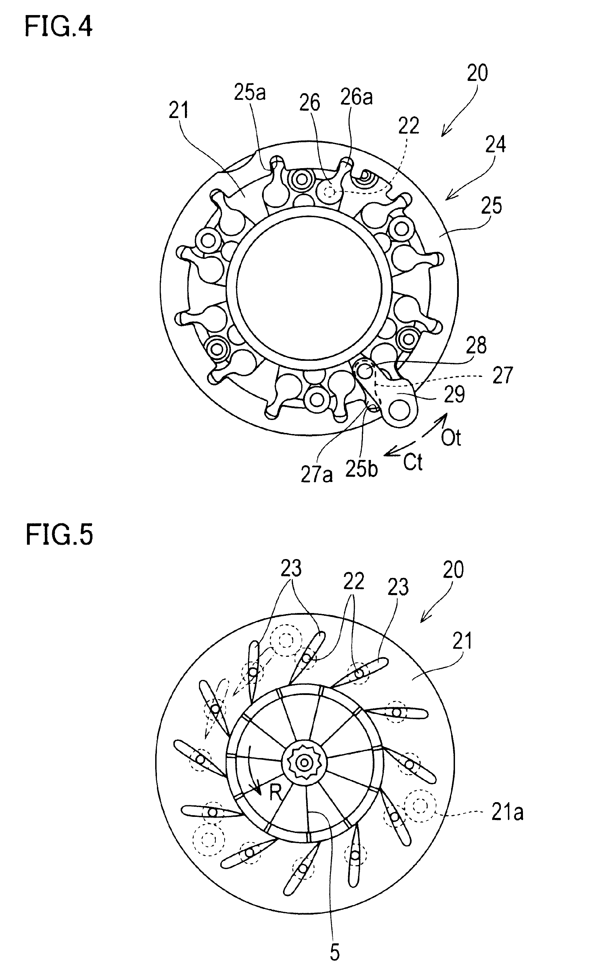

Figs. 4 and 5 show details of the movable vane mechanism 20 at the turbine 2 side (hereinafter, referred to as the exhaust-side movable vane mechanism). Both of Figs. 4 and 5 shows a state of viewing the turbine 2 in the same direction as Fig. 1 (i.e., corresponds to the direction of arrow I of Fig. 3).

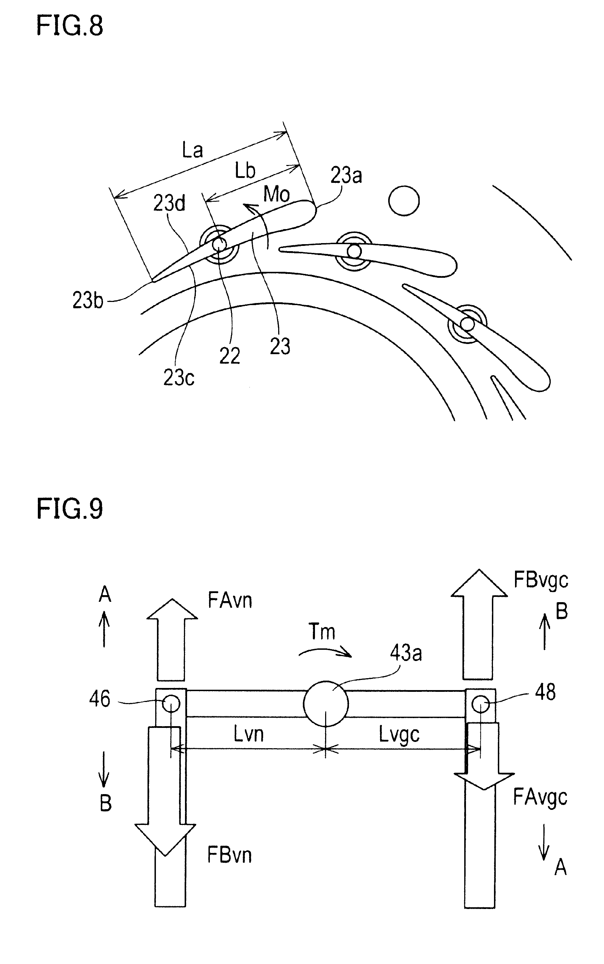

The exhaust-side movable vane mechanism 20 includes a base plate 21 located behind the turbine wheel 5, that is, at the side of the bearing housing 7, a number of movable vanes 23 attached on a front face of the base plate 21 as being rotatable respectively having a pin 22 as an axis, and a vane operation mechanism 24 located at a rear face side of the base plate 21. The movable vanes 23 are wing-shaped components (see Fig. 8) to direct exhaust gas flow so that exhaust gas flowing into the turbine housing 4 is guided to the outer circumference of the turbine wheel 5. That is, clearances between the movable vanes 23 constitute a flowpath of exhaust gas toward the turbine wheel 5. Each movable vane 23 is attached to one end part of each pin 22 as being integrally rotatable. Intervals of the pins 22 in the circumferential direction are equaled. The movable vanes 23 are rotated so as to open and close the exhaust path therebetween by rotating the movable vanes 23 having the respective pins 22 as axes, so that cross-sectional area of the exhaust path is varied. Here, a state that the exhaust path between the movable vanes 23 is opened is shown in Fig. 5 with solid lines. A state of being rotated until the exhaust path therebetween is approximately closed is shown with imaginary lines for some of the movable vanes 23.

The vane operation mechanism 24 includes a drive ring 25, a number of vane arms 26 located at an inner side of the drive ring 25, a drive arm 27 located between a pair of the vane arms 26, and an operation lever 29 connected to the drive arm 27 via a pin 28 as being integrally rotatable. The operation lever 29 is an operation input portion in the vane operation mechanism 24. The drive ring 25 is supported by an appropriate number of rollers 21a attached to the base plate 21 as being rotatable about an axis line of the turbine shaft 6 (see Fig. 3). The number of the vane arms 26 is the same as that of the movable vanes 23. Each vane arm 26 is connected to the other end part of each pin 22 protruded as piercing the base plate 21 to the rear face side as being integrally rotatable. Accordingly, the movable vane 23 and the vane arm 26 integrally rotate having the pin 22 as an axis.

A number of vane-arm groove portions 25a and a drive-arm groove portion 25b which is located between a pair of the groove portions 25a are arranged at the inner circumference of the drive ring 25. The number of the vane-arm groove portions 25a is the same as that of the vane arms 26. The vane-arm groove portions 25a are arranged at equal intervals in the circumferential direction. A distal end portion 26a of each vane arm 26 is fitted to each vane-arm groove portion 25a. Meanwhile, a distal end portion 27a of the drive arm 27 is fitted to the drive-arm groove portion 25b. Accordingly, when the operation lever 29 is rotationally operated in the direction of arrow Ct of Fig. 4 (i.e., the clockwise direction), the rotation is transmitted to the drive ring 25 via the drive arm 25 from the pin 28 to rotate the drive ring 25 in the same direction. As being interlocked therewith, each vane arm 26 is rotated about each pin 22 in the clockwise direction in Figs. 4 and 5. Accordingly, each movable vane 23 is also rotated about each pin 22 in the clockwise direction, so that cross-sectional area of the exhaust path between the movable vanes 23 is decreased. On the contrary, when the operation lever 29 is rotationally operated in the direction of arrow Ot of Fig. 4 (i.e., the counterclockwise direction), the drive ring 25 is rotated in the opposite direction to the above. In accordance therewith, each movable vane 23 is rotated about each pin 22 in the counterclockwise direction. With the above, cross-sectional area of the exhaust path between the movable vanes 23 is increased. That is, the movable vanes 23 are opened when the drive ring 25 is rotated in the same direction as the rotation direction R of the turbine shaft 6 and the movable vanes 23 are closed when the drive ring 25 is rotated in the opposite direction to the rotation direction R of the turbine shaft 6.

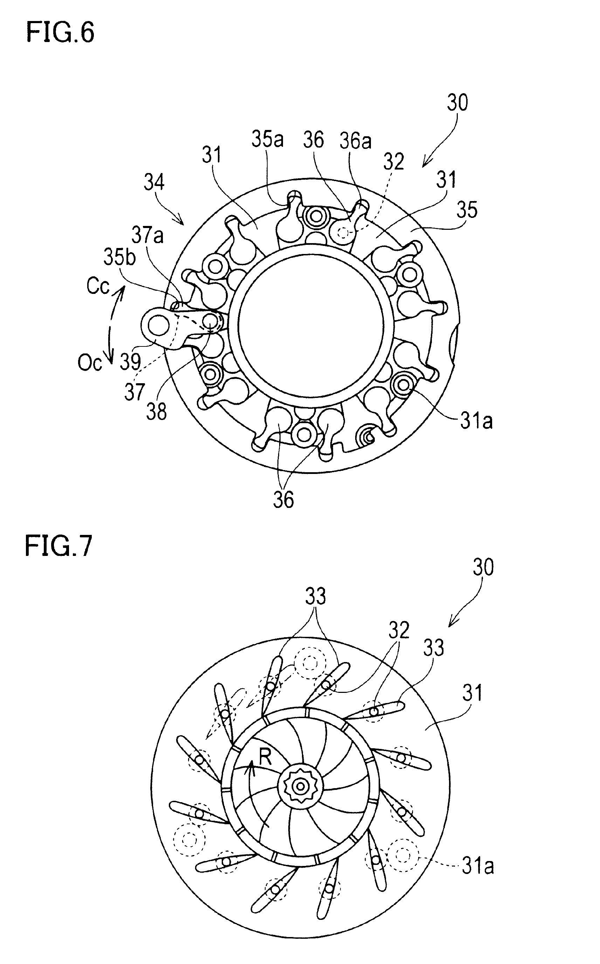

Figs. 6 and 7 show details of the movable vane mechanism 30 at the compressor 3 side (hereinafter, referred to as the intake-side movable vane mechanism). Both of Figs. 6 and 7 shows a state of viewing the compressor 3 in the same direction as Fig. 2 (i.e., corresponds to the direction of arrow II of Fig. 3).

The intake-side movable vane mechanism 30 includes a base plate 31 located behind the compressor wheel 11, that is, at the side of the bearing housing 7, a number of movable vanes 33 attached on a front face of the base plate 31 as being rotatable respectively having a pin 32 as an axis, and a vane operation mechanism 34 arranged at a rear face side of the base plate 31. The movable vanes 33 are wing-shaped components to direct intake air flow so that intake air flowing to the center part of the compressor wheel 11 is guided to the outer circumference of the compressor wheel 11. That is, clearances between the movable vanes 33 constitute a flow path of intake air to be delivered from the compressor wheel 11. Each movable vane 33 is attached to one end part of each pin 32 as being integrally rotatable. Intervals of the pins 32 in the circumferential direction are equaled. The movable vanes 33 are rotated so as to open and close the intake path therebetween by rotating the movable vanes 33 having the respective pins 32 as axes, so that cross-sectional area of the intake path is varied. Here, a state that the intake path between the movable vanes 33 is opened is shown in Fig. 7 with solid lines. A state of being rotated until the intake path therebetween is approximately closed is shown with imaginary lines for some of the movable vanes 33.

The vane operation mechanism 34 includes a drive ring 35, a number of vane arms 36 located at an inner side of the drive ring 35, a drive arm 37 located between a pair of the vane arms 36, and an operation lever 39 connected to the drive arm 37 via a pin 38 as being integrally rotatable. The operation lever 39 is an operation input portion in the vane operation mechanism 34. The operation lever 39 is located at the same side as the operation lever 29 of the exhaust-side movable vane mechanism 20 viewing from the turbine shaft 6 (e.g., the right side of the turbine shaft in Fig. 1). The driver ring 35 is supported by an appropriate number of rollers 31a attached to the base plate 31 as being rotatable about the axis line of the turbine shaft 6 (see Fig. 3). The number of the vane arms 36 is the same as that of the movable vanes 33. Each vane arm 36 is connected to the other end part of each pin 32 protruded as piercing the base plate 31 to the rear face side as being integrally rotatable. Accordingly, the movable vane 33 and the vane arm 36 integrally rotate having the pin 32 as an axis.

A number of vane-arm groove portions 35a and a drive-arm groove portion 35b which is located between a pair of the groove portions 35a are arranged at the inner circumference of the drive ring 35. The number of the vane-arm groove portions 35a is the same as that of the vane arms 36. The vane-arm groove portions 35a are arranged at equal intervals in the circumferential direction. A distal end portion 36a of each vane arm 36 is fitted to each vane-arm groove portion 35a. Meanwhile, a distal end portion 37a of the drive arm 37 is fitted to the drive-arm groove portion 35b. Accordingly, when the operation lever 39 is rotationally operated in the direction of arrow Cc of Fig. 6 (i.e., the clockwise direction), the rotation is transmitted to the drive ring 35 via the drive arm 35 from the pin 38 to rotate the drive ring 35 in the same direction. As being interlocked therewith, each vane arm 36 is rotated about each pin 32 in the clockwise direction in Figs. 6 and 7. Accordingly, each movable vane 33 is also rotated about each pin 32 in the clockwise direction, so that cross-sectional area of the intake path between the movable vanes 33 is decreased. On the contrary, when the operation lever 39 is rotationally operated in the arrow Oc of Fig. 6 (i.e., the counterclockwise direction), the drive ring 35 is rotated in the opposite direction to the above. In accordance therewith, each movable vane 33 is rotated about each pin 32 in the counterclockwise direction. With the above, cross-sectional area of the intake path between the movable vanes 33 are increased. That is, the movable vanes 33 are closed when the drive ring 35 is rotated in the same direction as the rotating direction R of the turbine shaft 6 and the movable vanes 33 are opened when the drive ring 25 is rotated in the opposite direction to the rotation direction R of the turbine shaft 6. The relation between the operational direction of the operation lever 39 and the open-close direction of the movable vanes 33 is opposite to the relation between the operational direction of the operation lever 29 and the open-close direction of the movable vanes 23 in the exhaust-side movable vane mechanism 20.

As shown in Fig. 8, attaching positions of the pins 22 against the movable vanes 23 of the exhaust-side movable vane mechanism 20 are disproportioned respectively to the side of a rear edge (i.e., an end edge at the inner circumferential side) 23b of the movable vane 23 from the center position of the movable vane 23 in the longitudinal direction. That is, the attaching positions of the pins 22 are determined so that a pivot ratio Lb/La is to be larger than 0.5 as indicated by equation (1) in the following. Here, La denotes the total length of the movable vane 23 and Lb denotes the distance from the pin 22 to a front edge (an end edge at the outer circumferential side) 23a of the movable vane 23. Since the movable vanes 23 are to change the flow direction of exhaust gas from the circumferential direction of the turbine wheel 5 toward the center side in the radial direction, a front face 23c side to which exhaust gas flow collides receives larger force from exhaust gas than a back face 23d side. Receiving force at an area between the front edge 23a of the movable vane 23 and the pin 22 exerts moment to the movable vane 23 in the opening direction and receiving force at an area between the pin 22 and the rear edge 23b exerts moment to the movable vane 23 in the closing direction. The magnitude relation of the moment therebetween depends on the respective distances from the pin 22 to the front edge 23a and the rear edge 23b. Accordingly, when the pivot ratio is set as described above, moment Mo is exerted to the movable vane 23 in the opening direction. That is, in the exhaust-side movable vane mechanism 20, drive force in the opening direction to be input to the operation lever 29 for operating the movable vanes 23 in the opening direction is lowered than drive force in the closing direction to be input to the operation lever 29 for operating the movable vanes 23 in the closing direction.
$$Lb/La > 0.5 \ \text{---} \ (1)$$

Further, attaching positions of the pins 32 of the movable vanes 33 of the intake-side movable vane mechanism 30 are set as being similar to Fig. 8. That is, the pivot ratio is as indicated by equation (1) in the above as replacing the movable vanes 23 of Fig. 8 with the movable vanes 33. Accordingly, moment is also exerted to the movable vanes 33 in the opening direction about the respective pins 32. Therefore, in the intake-side movable vane mechanism 30 as well, drive force in the opening direction to be input to the operation lever 39 for operating the movable vanes 33 in the opening direction is lowered than drive force in the closing direction to be input to the operation lever 39 for operating the movable vanes 33 in the closing direction.

As shown in Figs. 1 and 2, the drive mechanism 40 includes a single electric motor 41. The electric motor 41 is an actuator to function as a drive source respectively for the movable vanes 23, 33 as being used commonly by the movable vane mechanisms 20, 30. Rotation of the electric motor 41 is obtained from an output shaft 43 as being reduced in speed by a speed reduction mechanism 42. The output shaft 43 is arranged in parallel with the turbine shaft 6 and is rotationally driven by the electric motor 41 about the center part 43a thereof within a predetermined angle range. The drive mechanism 40 is provided with a link mechanism 45 to connect the output shaft 43 to the respective operation levers 29, 30 of the movable vane mechanisms 20, 30.

The link mechanism 45 includes a first rod 47 rotatably connected at one end side against the center part 43a of the output shaft 43 via a pin 46 and a second rod 49 rotatably connected to a position at the other side against the pin 46 as sandwiching the center part 43a via a pin 48. As shown in Fig. 1, a distal end part of the first rod 47 is rotatably connected to the operation lever 29 of the exhaust-side movable vane mechanism 20 via a pin 50. Meanwhile, as shown in Fig. 2, a distal end part of the second rod 49 is rotatably connected to the operation lever 39 of the intake-side movable vane mechanism 30 via a pin 51. In the link mechanism 45, the pin 46, the first rod 47 and the pin 50 function as an exhaust-side interlock mechanism, and then, the pin 48, the second rod 48 and the pin 51 function as an intake-side interlock mechanism.

Next, driving of the movable vane mechanisms 20, 30 by the drive mechanism 40 will be described. When the output shaft 43 is rotationally operated by the motor 41 of the drive mechanism 40 in the direction of arrow O of Fig. 2, the first link 47 is lifted and the operation lever 29 is rotationally driven in the rotation direction R of the turbine shaft 6 as being rotated in the rotation direction R of the turbine shaft 6. As is obvious from Figs. 4 and 5, when the operation lever 29 is driven in the rotation direction R, the movable vanes 23 are rotated in the direction to open the flow path therebetween (i.e., the direction of arrow Ot). Further, the second link 49 is depressed and the operation lever 39 is rotated in the opposite direction to the rotation direction R of the turbine shaft 6. As is obvious from Figs. 6 and 7, when the operation lever 39 is rotated in the opposite direction to the rotation direction R of the turbine shaft 6, the movable vanes 33 are rotated in the direction to open the flow path therebetween (i.e., the direction of arrow Oc).

On the contrary, when the output shaft 43 is rotatably driven by the motor 41 of the drive mechanism 40 in the direction of arrow C of Fig. 2, the first link 47 is depressed and the operation lever 29 is rotationally driven in the opposite direction to the rotation direction R of the turbine shaft 6 as being rotated in the opposite direction to the rotation direction R of the turbine shaft 6. As is obvious from Figs. 4 and 5, when the operation lever 29 is driven in the opposite direction to the rotation direction R, the movable vanes 23 are rotated in the direction to close the flow path therebetween (i.e., the direction of arrow Ct). Further, the second link 49 is lifted and the operation lever 39 is rotated in the rotation direction R of the turbine shaft 6. As is obvious from Figs. 6 and 7, when the operation lever 39 is rotated in the rotation direction R of the turbine shaft 6, the movable vanes 33 are rotated in the direction to close the flow path therebetween (i.e., the direction of arrow Cc).

As described above, according to the turbocharger 1 of the present embodiment, the movable vanes 23 at the turbine 2 side and the movable vanes 33 at the compressor 3 side can be integrally driven in the opening direction or closing direction by the single electric motor 41. Accordingly, it is possible to reduce in size and weight compared to a case that a dedicated actuator is arranged respectively to the turbine side and the compressor side. Therefore, it is possible to relieve space restriction for accommodating the turbocharger 1 in an engine room of a vehicle. Accordingly, it is possible to achieve vehicle lightening and cost reduction.

Here, opening control of the movable vanes 23, 33 may be the same as that of a known variable capacity turbocharger. For example, the operation of the electric motor 41 may be controlled to keep both of the movable vanes 23, 33 closed to the maximum while an engine is operated at idling and to gradually open the movable vanes 23, 33 in accordance with increase of the engine revolution speed. Further, when the engine revolution speed decreases, both of the movable vanes 23, 33 may be driven to the closing side. It is also possible to perform feedback control on the opening of the movable vanes 23, 33 to obtain a target supercharging pressure which is set in accordance with the revolution speed and load of the engine.

In the turbocharger 1 of the present embodiment, since both of the movable vanes 23, 33 are driven by the common electric motor 41, the opening of the movable vanes 33 at the compressor 3 side are unambiguously determined as well when the opening of the movable vanes 23 at the turbine 2 side is determined. Therefore, provided that a control program for the movable vanes at either the turbine side or the compressor side exists, there is an advantage that the both openings of the movable turbines 23, 33 can be appropriately controlled by utilizing the program. Here, it is assumed that a program to appropriately control the opening of the movable vanes 23 in accordance with the revolution speed and load of an engine exists for a turbine having the same specifications, for example. In this case, it is possible to appropriately control the opening of the movable vanes 33 at the compressor 3 side as well only by utilizing the control program for the movable vanes 23 at the turbine 2 side by previously obtaining data of the opening of the movable vanes 33 to maximize the compressor efficiency in accordance with the opening (i.e., the position) of the movable vanes 23 while operating the movable vanes 23 corresponding to the program and by adjusting length dimensions, attaching positions and the like of the output shaft 43, the second rod 49 and the operation lever 39 so that the movable vanes 33 are operated corresponding to the obtained data. In this regard, in the case that the movable vanes 23, 33 are driven respectively by a separate actuator, the opening of the movable vanes 33 is required to be controlled so that the compressor efficiency is maximized after detecting state quantity such as supercharging pressure and air-flow quantity appearing as control effects while performing feedback control of the opening of the movable vanes 23 at the turbine 2 side, for example. Accordingly, the control becomes complicated with increased control parameters and the supercharging performance is impaired when response difference occurs between both controls. On the contrary, the present embodiment can be sufficiently controlled being similar to the control of a turbocharger which has movable vanes only at the turbine side or the compressor side. Accordingly, the control becomes uncomplicated, and there is not a fear of supercharging performance decrease due to delay in response.

Further, in the turbocharger 1 of the present embodiment, assist force in the opening direction is exerted to the movable vanes 23, 33 as utilizing flow of exhaust gas or intake air for operating the movable vanes 23, 33 in the opening direction by setting the pivot ratio of the movable vanes 23, 33 as described above, so that drive force to be input to the operation lever 29, 39 is lowered. Accordingly, it is possible to lower the output torque of the electric motor 41 required for driving the movable vanes 23, 33 in the opening direction. That is, as shown in Fig. 9, assist forces FAvn, FAvgc corresponding to the forces received by the movable vanes 23, 33 from exhaust gas are exerted to the pins 46, 48 which are located at connection points between the output shaft 43 and the respective rods 47, 49 in the direction to open the movable vanes 23, 33 (i.e., the direction of arrow A). Meanwhile, drive resistances FBvn, FBvgc are exerted in the direction to close the movable vanes 23, 33 (i.e., the direction of arrow B). Drive torque (i.e., moment) Tm to be generated about the center part 43a of the output shaft 43 for opening the movable vanes 23, 33 is expressed by equation (2) in the following. Here, Lvn and Lvgc denote respective distances from the center 43a of the output shaft 43 to the respective pin 46, 48 being the connection points of the rods 47, 49.

$$Tm = FBvn \cdot Lvn + FBvgc \cdot Lvgc - (FAvn \cdot Lvn + FAvgc \cdot Lvgc) \quad --- \quad (2)$$

The moment generated by setting the pivot ratio of the movable vanes 23, 33 as described above is expressed in parentheses of equation (2) and the direction thereof corresponds to the rotation direction of the output shaft 43 (i.e., the direction of the drive torque Tm) to drive the movable vane 23, 33 in the opening direction. Accordingly, output torque of the electric motor 41 can be sufficient as being less compared to a case that moment in the same direction cannot be obtained or a case that moment in the opposite direction is generated. In this manner, even with the structure to drive both of the movable vanes 23 at the turbine 2 side and the movable vanes 33 at the compressor 3 side by the single electric motor 41, it is possible to reduce in size and weight of the electric motor 41 as reducing rated torque required for the electric motor 41.

The present invention is not limited to the above-described embodiments, and may be embodied in various modes. In the above embodiment, the pivot ratios of the movable vanes 23, 33 are set as expressed by equation (1) as a device to lower the drive force of the operation lever 29, 39 in the opening direction compared to the drive force in the closing direction. However, it is also possible to lower the output torque of the electric motor 41 when the pivot ratio of only one of the movable vane mechanisms is set as expressed by equation (1) compared to a case that the pivot ratios of the both movable vane mechanisms do not satisfy equation (1). Further, not limited to the pivot ratio, it is possible to lower drive force required for the actuator such as an electric motor by applying force to the movable vanes in the opening direction with a device such as a spring. Further, when it is possible to dispose an actuator having sufficient performance even if the drive force in the opening direction is set to be the same magnitude of the drive force in the closing direction or larger, the device to lower the drive force in the opening direction compared to the drive force in the closing direction can be omitted.

The above structure of the exhaust-side movable vane mechanism 20 and the intake-side movable vane mechanism 30 is an example and the movable vane mechanisms can be appropriately modified as long as being structured to vary cross-sectional area of flowpath of exhaust gas or intake air owing to open-close operation of movable vanes. Not limited to an electric motor, the actuator can be appropriately modified as long as being an apparatus to generate drive force by utilizing fluid pressure or electric power. Not limited to the examples shown in the drawings, the arrangement of the actuator and the output shaft thereof and the structure of the exhaust-side interlock mechanism and the intake-side interlock mechanism can be modified such that operation of a liner motion actuator is transmitted to an operation input portion of a movable vane mechanism by utilizing various mechanical elements such as a gear, a lever and a link, for example.

**Claims**

1. A variable capacity supercharger for an internal combustion engine, comprising:

   a turbine including an exhaust-side movable vane mechanism which varies cross-sectional area of a flow path of exhaust gas introduced into a turbine wheel by open-close operation of a movable vane;
   a compressor including an intake-side movable vane mechanism which varies cross-sectional area of a flow path of intake air delivered from a compressor wheel by open-close operation of a movable vane; and
   a drive mechanism having an actuator used in common by the exhaust-side movable vane mechanism and the intake-side movable vane mechanism to perform open-close operation of the movable vane of each movable vane mechanism as transmitting operation of the actuator to both of the movable vane mechanisms.

2. The variable capacity supercharger according to claim 1, wherein
   the drive mechanism and operation input portions of both of the movable vane mechanisms are respectively connected so that the movable vane of the intake-side movable vane mechanism is operated in the opening direction as well when the movable vane of the exhaust-side movable vane mechanism is operated in the opening direction; and
   at least either the exhaust-side movable vane mechanism or the intake-side movable vane mechanism is provided with a device which lowers drive force in the opening direction to be added to the operation input portion when operating the movable vane in the opening direction than drive force in the closing direction to be added to the operation input portion when operating the movable vane in the closing direction.

3. The variable capacity supercharger according to claim 2, wherein
   distance from the rotation center of the movable vane to an end edge at an outer circumferential side of the movable vane is set to be larger than distance from the center position to an end edge at an inner circumferential side of the movable vane as the lowering device.

4. The variable capacity supercharger according to any one of claims 1 to 3, wherein
   operational direction of the operation input portion of the exhaust-side movable vane mechanism and operational direction of the operation input portion of the intake-side vane drive mechanism are set respectively in circumferential directions of the turbine and the compressor;
   a relation between the operational direction of the operation input portion of the intake-side movable vane mechanism and the open-close direction of the movable vane of the intake-side movable vane mechanism is set to be opposite to a relation between the operational direction of the operation input portion of the exhaust-side movable vane mechanism and the open-close direction of the movable vane of the exhaust-side movable vane mechanism; and
   the drive mechanism includes an output shaft which is rotationally driven by the actuator, an exhaust-side interlock mechanism which converts rotation of the output shaft into rotation of the operation input portion of the exhaust-side movable vane mechanism as existing between one side against the center part of the output shaft and the operation input portion of the exhaust-side movable vane mechanism, and an intake-side interlock mechanism which converts rotation of the output shaft into rotation of the operation input portion of the intake-side movable vane mechanism as existing between the other side against the center part of the output shaft and the operation input portion of the intake-side movable vane mechanism.

5. The variable capacity supercharger according to claim 4, wherein

the operation input portion of the exhaust-side movable vane mechanism and the operation input portion of the intake-side movable vane mechanism are located at the same side viewing from a turbine shaft;

the output shaft is arranged in parallel with the turbine shaft; and

each of the exhaust-side interlock mechanism and the intake-side interlock mechanism includes a rod which is rotatably connected respectively to the output shaft and the operation input portion thereof.

# FIG.1

FIG.2

# FIG.3

FIG.4

FIG.5

FIG.6

FIG.7

FIG.8

FIG.9

## INTERNATIONAL SEARCH REPORT

| International application No. |
|---|
| PCT/JP2009/052061 |

A. CLASSIFICATION OF SUBJECT MATTER
*F02B37/24*(2006.01)i, *F04D29/46*(2006.01)i

According to International Patent Classification (IPC) or to both national classification and IPC

B. FIELDS SEARCHED

Minimum documentation searched (classification system followed by classification symbols)
F02B37/24, F04D29/46

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2000-204907 A (Mitsubishi Heavy Industries, Ltd.),<br>25 July, 2000 (25.07.00),<br>Fig. 1<br>(Family: none) | 1-3<br>4,5 |
| Y<br>A | JP 2007-132232 A (Toyota Motor Corp.),<br>31 May, 2007 (31.05.07),<br>Fig. 3<br>(Family: none) | 1-3<br>4,5 |
| A | JP 64-066419 A (Hino Motors, Ltd.),<br>13 March, 1989 (13.03.89),<br>Claims<br>(Family: none) | 1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>07 April, 2009 (07.04.09) | Date of mailing of the international search report<br>21 April, 2009 (21.04.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/052061 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2007-309299 A  (Toyota Motor Corp.),<br>29 November, 2007 (29.11.07),<br>Fig. 2<br>(Family: none) | 1-5 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005163691 A
- JP 8254127 A
- JP 2006169985 A